# EUROPEAN PATENT APPLICATION

(11) **EP 4 607 809 A1**
(43) Date of publication of application: **27.08.2025**
(21) Application number: 25158555.0
(22) Date of filing: 18.02.2025
(51) Int. Cl.: H04B 5/20, H04B 5/70

(54) **SYSTEM AND METHOD FOR COMMUNICATING IN SHIP USING MAGNETIC FIELD COMMUNICATION**

(30) Priority: 20.02.2024 KR 20240024022
(71) Applicant: Sunny Wave Tech Co., Ltd., Ulju-gun Ulsan 44919 (KR)
(72) Inventor: KIM, Hak Sun, 06355 SEOUL (KR); LEE, Hak Gon, 12913 HANAM-SI (KR)
(74) Representative: EP&C

(57) **Abstract**

The present invention relates to an onboard communication device and method. According to the present invention, by combining magnetic material-based magnetic field communication, which utilizes metal surfaces as a medium for communication, with existing wireless and wired communication methods, it enables wireless connections even in environments where wireless communication is not possible, such as the interior of a ship. This minimizes the need for wired connections and allows for the easy establishment of an onboard communication environment with a simpler configuration and lower costs. The invention provides an onboard communication system and method using magnetic material-based magnetic field communication that enables this.

## Description

### TECHNICAL FIELD

The present invention relates to a device and method for communication within a ship, and more specifically, it aims to solve the issues of conventional onboard communication systems and methods, where implementing a wireless communication environment was difficult due to the numerous metal bulkheads typically found inside the ship (such as internal walls of the ship). The invention provides a communication environment within the ship by utilizing magnetic material-based magnetic field communication, which allows communication through metal surfaces, making it easier to establish an onboard communication environment.

Furthermore, the present invention addresses the problem that it is difficult to implement an onboard communication system within a ship using conventional wireless communication methods, as previously mentioned. When using wired communication to establish an onboard communication environment, it is necessary to connect communication lines throughout the entire internal space of the ship, which complicates the overall configuration of the communication system for onboard communication and increases the costs for installation and maintenance, making it challenging to implement a communication environment. To resolve the issues of conventional onboard communication systems and methods, the present invention combines magnetic material-based magnetic field communication (which enables communication through metal surfaces) with existing wireless and wired communication methods, allowing wireless connectivity even in environments where wireless communication is not possible, such as inside the ship. By minimizing the need for wired connections, the invention enables an onboard communication environment to be easily established with a simpler configuration and lower costs.

### BACKGROUND

Traditionally, in general, wireless communication experiences signal loss or distortion when there are obstacles or conductors, such as metals, in the transmission path, which prevents normal communication. For example, in environments like the interior of a ship, which is made of metal materials, it is difficult to implement a communication environment using wireless communication due to this limitation.

Additionally, to solve this issue, when wired communication is used to establish an onboard communication environment, it is necessary to connect communication lines throughout the entire internal space of the ship. This complicates the overall configuration of the communication system, increases the costs for installation and maintenance, and similarly creates difficulties in easily implementing an onboard communication environment.

For example, as presented in Korean Registered Patent Publication No. 10-2287530 "Wireless Communication Device for Ships and Its Method" and Korean Registered Patent Publication No. 10-1548362 "Onboard Voice Communication and Safety Management System," various devices and methods have been proposed to establish a communication environment on a ship. However, the conventional technologies mentioned above have the following limitations.

That is, as mentioned above, in general, wired communication necessarily requires the installation of communication lines, which makes the construction of the communication system more cumbersome and increases the costs for installation and maintenance. In contrast, wireless communication allows the communication system to be implemented more simply without the need for installing communication lines.

Therefore, although technologies using wireless communication to establish onboard communication environments have been proposed, as noted in the prior art mentioned above, due to the metal structure of the ship, it is not possible to establish an onboard communication environment using only conventional wireless communication. This requires additional components, which ultimately makes the entire system more complex and increases the cost.

Therefore, to solve the limitations of the conventional onboard communication systems and methods mentioned above, it is desirable to propose a new configuration of an onboard communication system and method using magnetic material-based magnetic field communication, which allows communication through metal surfaces, and enables the establishment of an onboard communication environment with a simpler configuration and lower cost. However, to date, no device or method has been proposed that satisfies all of these requirements.

### SUMMARY

The present invention aims to solve the problems of the conventional technologies mentioned above. Therefore, the objective of the present invention is to provide an onboard communication system and method using magnetic material-based magnetic field communication, which allows for easier establishment of an onboard communication environment within a ship, for example, in environments like the ship's interior, where multiple metal bulkheads are installed, making it difficult to implement a communication environment using wireless communication. The invention utilizes metal surfaces as a medium to enable communication through magnetic material-based magnetic field communication, thereby making it easier to establish a communication environment within the ship.

Another objective of the present invention is to solve the problem where it is difficult to establish an onboard communication system using conventional wireless communication methods, as mentioned above. When using wired communication to establish an onboard communication environment, communication lines must be connected throughout the entire internal space of the ship. This results in a more complex communication system, increasing costs for installation and maintenance, and making it difficult to implement the communication environment. To address these issues, the invention combines magnetic material-based magnetic field communication, which enables communication through metal surfaces, with conventional wireless and wired communication methods. This allows wireless connectivity even in environments where wireless communication is not possible, such as inside the ship. By minimizing the need for wired connections, it becomes possible to easily establish an onboard communication environment with a simpler configuration and lower cost.

To achieve the above-mentioned objectives, according to the present invention, in an onboard communication system using magnetic material-based magnetic field communication, the system comprises: A magnetic field communication processing unit including a magnetic material-based magnetic field communication module that performs communication through metal structures using magnetic material-based magnetic field communication; A wireless communication processing unit including a wireless communication module that performs communication using a predetermined wireless communication method; A wired communication processing unit including a wired communication module that performs communication using a wired communication method through communication lines; A control unit that controls the overall operation of the system and performs processing to transmit each received signal externally according to pre-set configurations. This constitutes the onboard communication system using magnetic material-based magnetic field communication as described above.

In this system, the magnetic field communication processing unit is configured to perform the following: In an environment where wireless communication is not possible, such as the interior of a ship that includes bulkheads, it transmits and receives magnetic field communication signals with external devices through magnetic material-based magnetic field communication, and delivers the magnetic field communication signals received from the external device to the control unit.

Additionally, the wireless communication processing unit is configured to perform the following: Using a pre-set single or multiple wireless communication methods, including Wi-Fi, RF, Bluetooth, NFC, LTE, or 5G, it transmits and receives wireless communication signals with external devices, and delivers the wireless communication signals received from the external device to the control unit.

Furthermore, the wired communication processing unit is configured to perform the following: Using a single or multiple wired communication methods, including RS232, RJ45, or Ethernet, it transmits and receives wired communication signals through communication lines with external devices, and delivers the wired communication signals received from the external device to the control unit.

Moreover, the control unit is configured to perform the following: It transmits the magnetic field communication signals, wireless communication signals, and wired communication signals, which are received through the magnetic field communication processing unit, wireless communication processing unit, and wired communication processing unit, to an external device, including a router, according to pre-set configurations.

Additionally, the system is configured by installing multiple of the above systems at predetermined locations within the ship to establish a mesh network and backbone network. Each of these systems transmits and receives communication signals with each other according to pre-set configurations, while simultaneously transmitting and receiving communication signals with external devices, including a router. This allows the system to integrate magnetic field communication, wireless communication, and wired communication, enabling the system to function as a unified wireless and wired access point (AP). This configuration makes it easier to establish an onboard communication environment, even in environments where wireless communication is not available, by using magnetic field communication to connect various devices or equipment using different communication methods.

Moreover, according to the present invention, in the onboard communication method, the following steps are performed: A network setup step, where APs are installed at predetermined locations within the ship to establish the onboard communication network. A communication step, where communication signals are transmitted and received between various devices inside the ship and external devices through the APs installed in the network setup step. The APs are configured using the onboard communication system that utilizes magnetic material-based magnetic field communication as described above. Thus, the onboard communication method is provided.

Furthermore, according to the present invention, a ship configured with the onboard communication system utilizing magnetic material-based magnetic field communication, as described above, is also provided.

As mentioned above, according to the present invention, an onboard communication system and method using magnetic material-based magnetic field communication, which utilizes metal surfaces as a medium for communication and combines it with existing wireless and wired communication methods, are provided. This allows communication to be possible inside the ship, even in environments where wireless communication is not feasible, such as the interior of a ship. As a result, the need for wired connections is minimized, enabling an onboard communication environment to be established with a simpler configuration and lower costs.

Additionally, according to the present invention, by combining magnetic material-based magnetic field communication, which utilizes metal surfaces as a medium for communication, with existing wireless and wired communication methods, an onboard communication system and method are provided that allow for the easy establishment of a communication environment inside the ship with a simpler configuration and lower costs. This resolves the problem of the prior art wireless communication-based onboard communication systems and methods, where it was difficult to implement a communication environment using wireless communication in metal environments like the interior of a ship.

Furthermore, according to the present invention, by combining magnetic material-based magnetic field communication, which utilizes metal surfaces as a medium for communication, with existing wireless and wired communication methods, an onboard communication system and method are provided that allow for the easy establishment of a communication environment with a simpler configuration and lower costs. This resolves the problem of the prior art wired communication-based onboard communication systems and methods, where it was necessary to connect communication lines throughout the entire internal space of the ship. This made the overall system configuration complex, increased installation and maintenance costs, and made it difficult to implement the communication environment.

### BRIEF DESCRIPTION OF THE DRAWINGS

Fig. 1 is a block diagram schematically illustrating the overall configuration of an onboard communication system using magnetic material-based magnetic field communication according to an embodiment of the present invention.
Fig. 2 is a conceptual diagram schematically illustrating a configuration example of the onboard communication system using magnetic material-based magnetic field communication according to the embodiment shown in Fig. 1.
Fig. 3 is a conceptual diagram schematically illustrating the configuration of an onboard backbone network constructed by forming a mesh network using the onboard communication system according to the embodiment shown in Fig. 1.
Fig. 4 and Fig. 5 are diagrams schematically illustrating the specific configuration of performance tests for testing the performance of the onboard communication system using magnetic material-based magnetic field communication, as applied to an actual ship according to the embodiment shown in Fig. 1.
Fig. 6 and Fig. 7 are diagrams illustrating the results of the performance tests performed as shown in Figs. 4 and 5.

### DETAILED DESCRIPTION OF THE PREFERRED EMBODIMENTS

Hereinafter, with reference to the attached drawings, a specific embodiment of the onboard communication system and method using magnetic material-based magnetic field communication according to the present invention will be described.

The following description presents only one embodiment for carrying out the present invention, and it should be noted that the present invention is not limited to the contents of the embodiment described below.

In addition, in the description of the embodiment of the present invention below, parts that are identical or similar to the contents of the prior art, or parts that can be easily understood and implemented by those skilled in the art, have been omitted for brevity.

Next, with reference to the drawings, the specific details of the onboard communication system and method using magnetic material-based magnetic field communication according to the present invention will be described.

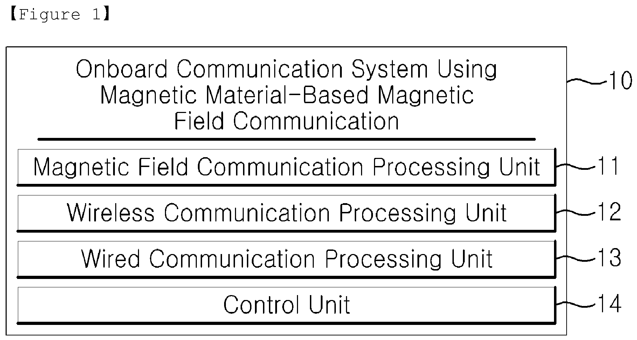

More specifically, first, referring to FIG. 1, FIG. 1 is a block diagram schematically showing the overall configuration of the onboard communication system (10) using magnetic material-based magnetic field communication according to an embodiment of the present invention.

As shown in FIG. 1, the onboard communication system (10) using magnetic material-based magnetic field communication according to an embodiment of the present invention is broadly divided into a magnetic communication processing unit (11) that includes a magnetic communication module through which communication is performed using magnetic material-based magnetic field communication via metal structures such as internal bulkheads, a wireless communication processing unit (12) that includes a wireless communication module through which communication is performed using a predetermined wireless communication method, a wired communication processing unit (13) that includes a wired communication module through which communication is performed via communication lines, and a control unit (14) that controls the overall operation of the aforementioned units and transmits each received signal to the outside according to predetermined settings.

Here, the magnetic communication processing unit (11) is configured to perform a process where signals transmitted from external sources, such as various sensors or measuring devices, are received and transmitted to the control unit (14) through magnetic material-based magnetic field communication in environments where wireless communication is difficult to apply on board.

Additionally, the wireless communication processing unit (12) is configured to receive wireless communication signals from various wireless communication-based devices, such as user terminals or mobile devices like smartphones and tablet PCs, through a predetermined single or multiple wireless communication methods, such as Wi-Fi, RF, Bluetooth, NFC, LTE, or 5G, and transmit the received signals to the control unit (14).

Moreover, the wired communication processing unit (13) is configured to receive communication signals from various devices, such as PCs or CCTV cameras, which are connected through communication lines like RS232, RJ45, Ethernet, etc., and transmit the received signals to the control unit (14).

Furthermore, the control unit (14) is configured to receive magnetic communication signals, wireless communication signals, and wired communication signals through the aforementioned communication modules, and perform processing to transmit the received signals to external devices according to a predefined setup, effectively performing the function of an Access Point (AP).

Therefore, with the configuration described above, by using the onboard communication system (10) based on magnetic material-based magnetic field communication, various devices or equipment utilizing different communication methods-magnetic material-based magnetic field communication, wireless communication, and wired communication-can be interconnected into one device for communication.

Furthermore, by using the onboard communication system (10) based on magnetic material-based magnetic field communication according to an embodiment of the present invention, it becomes easier to establish a wireless communication environment even in environments, such as the interior of a ship, where wireless communication is not possible due to obstacles.

In other words, by installing the onboard communication system (10), which is configured as described above, at predefined locations inside the ship, and by having each system (10) communicate with each other while simultaneously transmitting communication signals to external communication equipment such as routers, the system functions as an Access Point (AP). This configuration allows the easy implementation of a shipboard communication system that can connect various devices using different communication methods through a single system.

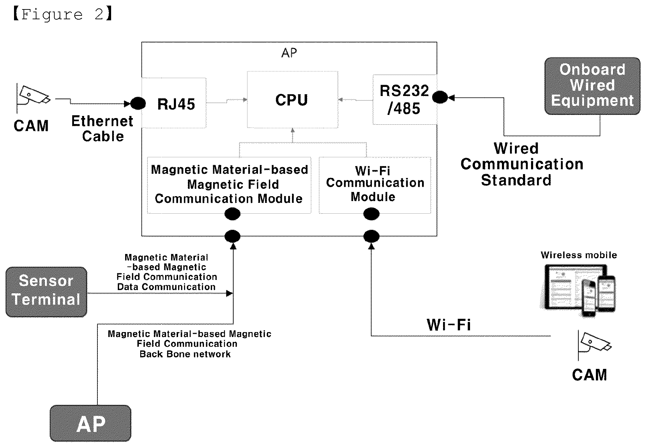

More specifically, referring to Figure 2, Figure 2 is a conceptual diagram that roughly illustrates a specific configuration example of an integrated wired and wireless AP using the onboard communication system (10) based on magnetic material-based magnetic field communication according to an embodiment of the present invention.

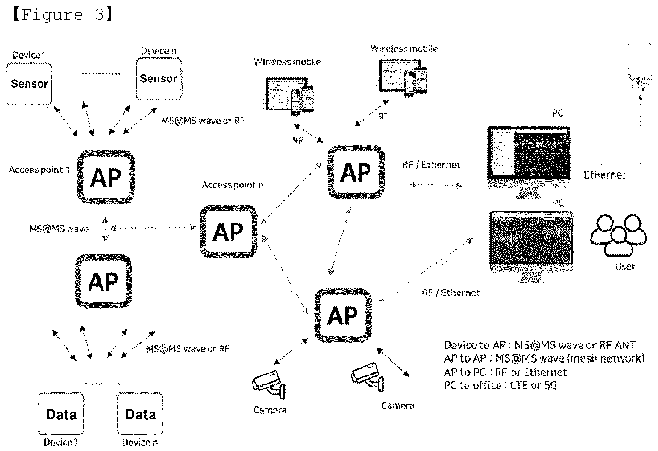

Furthermore, referring to Figure 3, Figure 3 roughly shows the configuration of a shipboard backbone network (Backbone network) established by forming a mesh network using the onboard communication system (10) based on magnetic material-based magnetic field communication according to an embodiment of the present invention. Here, MS@MS wave refers to magnetic material-based magnetic field communication.

As shown in Figures 2 and 3, using the onboard communication system (10) based on magnetic material-based magnetic field communication according to an embodiment of the present invention, it is possible to establish a magnetic material-based magnetic field communication backbone network (Backbone network) through an AP performing magnetic material-based magnetic field communication. By utilizing both wired and wireless communication for connecting to the commercial network (LTE/5G) and mobile devices, a unified platform that uses magnetic material-based magnetic field communication, wired, and wireless communication environments can be easily established with a single AP device.

That is, for example, cameras used for real-time monitoring inside the ship may be configured with wireless and wired networks such as RF or Ethernet, while wireless networks for enabling crew members or workers to access via mobile devices may be configured using Wi-Fi. For various sensors or terminals used for environmental monitoring on the ship, when wireless or wired communication is not possible, they may be configured with a magnetic material-based magnetic field communication network. Similarly, various onboard equipment, such as engines or generators, may be interconnected with terminals using a combination of wired, wireless, and magnetic material-based magnetic field communication networks as needed.

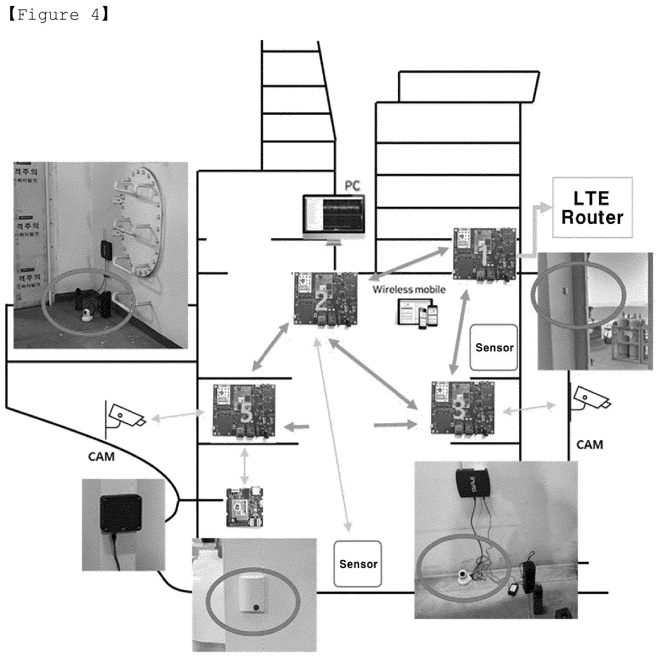

Therefore, as described above, the onboard communication system (10) using magnetic material-based magnetic field communication according to the embodiment of the present invention can be easily implemented. Next, referring to Figures 4 to 6, we will explain the experimental verification of the actual communication performance of the onboard communication system (10) according to the embodiment of the present invention, as configured above.

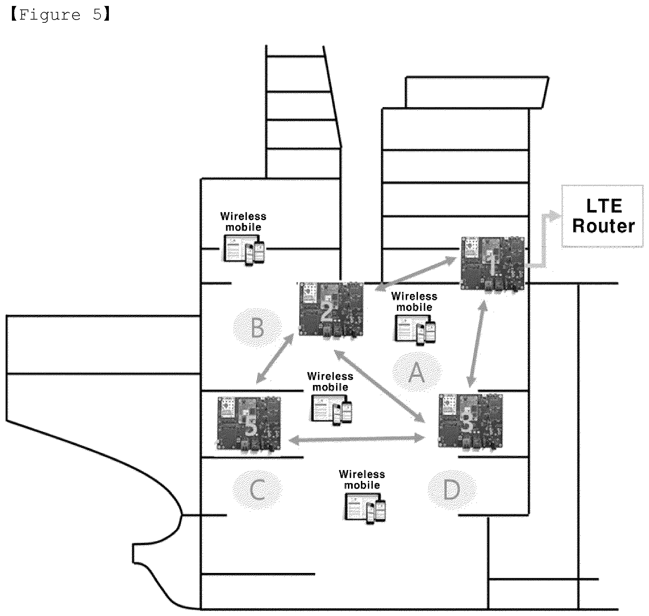

That is, referring to Figures 4 and 5, these figures roughly show the specific configuration of the performance test for applying the onboard communication system (10) using magnetic material-based magnetic field communication, as shown in Figure 1, to a real ship.

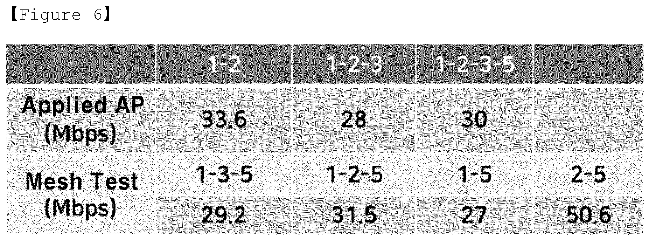

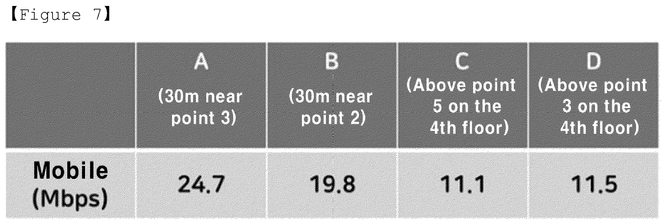

Additionally, referring to Figures 6 and 7, these figures show the results of the performance tests conducted as described in Figures 4 and 5.

As shown in Figures 4 and 5, the inventors, in order to verify the actual communication performance of the onboard communication system (10) using magnetic material-based magnetic field communication according to the embodiment of the present invention, applied the onboard communication system (10) using magnetic material-based magnetic field communication to a real ship (Upper deck ~ 4th floor), built a backbone network (AP 1, 2, 3, 5), and measured the communication performance for each path and point.

In the configuration shown in Figures 4 and 5, each sensor is configured with a magnetic material-based magnetic field communication and Wi-Fi-based Internet of Things (IoT) platform, and the wired interconnection between each device is connected via RS 232, with cameras connected using RJ45-based wired communication.

As a result of the experiment, first, as shown in Figure 6, the communication speed with AP 1 and 2 applied was 33.6 Mbps, the communication speed with AP 1, 2, and 3 applied was 28 Mbps, and the communication speed with AP 1, 2, 3, and 5 applied was 30 Mbps.

Additionally, the communication speed through the AP 1-3-5 path was measured at 29.2 Mbps, the communication speed through the AP 1-2-5 path was 31.5 Mbps, the communication speed through the AP 1-5 path was 27 Mbps, and the communication speed through the AP 2-5 path was 50.6 Mbps.

Furthermore, as shown in Figure 7, the speed measurement results at points A to D, as shown in Figure 5, are as follows: the communication speed at point A was 24.7 Mbps, at point B it was 19.8 Mbps, at point C it was 11.1 Mbps, and at point D it was 11.5 Mbps.

Therefore, from the results mentioned above, it can be confirmed that the backbone network constructed using the onboard communication system (10) employing magnetic material-based magnetic field communication according to the embodiment of the present invention has relatively good communication performance.

From the above information, it can be confirmed that the onboard communication system (10) using magnetic material-based magnetic field communication according to the embodiment of the present invention enables the construction of an onboard communication system that is more effective and efficient compared to existing methods, while also ensuring sufficient communication performance.

In the above embodiment of the present invention, Wi-Fi is used for wireless communication and RS 232 and RJ45 are used for wired communication as an example to explain the invention. However, the present invention is not limited to the content presented in the above embodiment. That is, the present invention can be configured to communicate using various wired and wireless communication methods other than those presented in the embodiment of the invention. Therefore, it should be noted that the present invention can be modified and changed in various ways by those skilled in the art as long as it does not depart from the scope and essence of the present invention.

Additionally, in the above embodiment of the present invention, regarding the configuration of communication using magnetic material-based magnetic field communication, wireless communication, and wired communication, more specific details can be found by referring to the content of various conventional communication devices and methods. These matters are self-evident to those skilled in the art. Therefore, in the present invention, for the sake of brevity, detailed explanations of content that are self-evident to those skilled in the art or that can be easily understood and implemented by referring to conventional technology literature have been omitted.

Therefore, as described above, the onboard communication system and method using magnetic material-based magnetic field communication according to the embodiment of the present invention can be implemented, and as a result, according to the present invention, by combining magnetic material-based magnetic field communication with wireless communication and wired communication methods, it is possible to easily build an onboard communication environment with a simple configuration and low cost, even in environments such as the interior of ships, which are made of metal materials.

In conclusion, through the above-described embodiment of the present invention, a detailed description of the onboard communication system and method using magnetic material-based magnetic field communication according to the present invention has been provided. However, the present invention is not limited to the contents described in the above embodiment. Therefore, it is natural that the present invention can be modified, changed, combined, and substituted in various ways according to the design needs and other factors by those skilled in the art in the relevant technical field.

### Description of Reference Numerals and Symbols

10: Onboard Communication System Using Magnetic Material-Based Magnetic Field Communication
11: Magnetic Field Communication Processing Unit
12: Wireless Communication Processing Unit
13: Wired Communication Processing Unit
14: Control Unit

## Claims

1. An onboard communication system using magnetic material-based magnetic field communication, the system comprises:
a magnetic field communication processing unit including a magnetic material-based magnetic field communication module configured for performing communication through metal structures using magnetic material-based magnetic field communication;
a wireless communication processing unit including a wireless communication module configured for performing communication via a predetermined wireless communication method;
a wired communication processing unit including a wired communication module configured for performing communication via a wired communication method through communication lines;
a control unit that controls the overall operation of the system and configured for performing processing to transmit each received signal externally according to pre-set configurations.

2. The onboard communication system using magnetic material-based magnetic field communication according to claim 1, wherein
the magnetic field communication processing unit is configured to perform the following:
in an environment where wireless communication is not possible due to metal bulkheads inside the ship, it transmits and receives magnetic field communication signals with an external device through magnetic material-based magnetic field communication, and delivers the magnetic field communication signals received from the external device to the control unit.

3. The onboard communication system using magnetic material-based magnetic field communication according to claim 1 or claim 2, wherein
the wireless communication processing unit is configured to perform the following:
using a pre-set single or multiple wireless communication methods, including Wi-Fi, RF, Bluetooth, NFC, LTE, or 5G, it transmits and receives wireless communication signals with an external device, and delivers the wireless communication signals received from the external device to the control unit.

4. The onboard communication system using magnetic material-based magnetic field communication according to any one of the preceding claims, wherein
the wired communication processing unit is configured for using a single or multiple wired communication methods including RS232, RJ45, and Ethernet to transmit and receive wired communication signals with external devices through communication lines, and to transmit the wired communication signals received from external devices to the control unit.

5. The onboard communication system using magnetic material-based magnetic field communication according to any one of the preceding claims, wherein
the control unit, which is configured to transmit the magnetic field communication signals, wireless communication signals, and wired communication signals received through the magnetic field communication processing unit, the wireless communication processing unit, and the wired communication processing unit to an external device includes a router, according to a pre-determined setting.

6. The onboard communication system using magnetic material-based magnetic field communication according to any one of the preceding claims, wherein
the system comprises multiple instances of the system at pre-determined locations inside the ship to establish a mesh network and backbone network, and having each system transmit and receive communication signals with each other according to pre-determined settings while also transmitting and receiving communication signals with external devices, including routers, performs the function of an integrated wired and wireless access point (AP) by combining magnetic material-based magnetic field communication, wireless communication, and wired communication.

7. An onboard communication method, comprising
a network construction step, wherein each AP is installed at pre-determined locations inside the ship to establish an onboard communication network; and
a communication step, wherein communication signals are transmitted and received between various devices inside the ship and external devices through the APs installed in the network construction step,
wherein the AP is configured using the onboard communication system based on magnetic material-based magnetic field communication according to any one of the preceding claims.

8. A ship, which is configured to include the onboard communication system using magnetic material-based magnetic field communication according to any one of the preceding claims 1-6.
